# EUROPEAN PATENT SPECIFICATION

(11) **EP 0 751 230 B1**
(45) Date of publication and mention of the grant of the patent: **06.05.1999**
(21) Application number: 95938632.7
(22) Date of filing: 01.12.1995
(51) Int. Cl.: C22C 19/00, C22C 19/03, C22C 19/05, C22C 19/07

(54) **HIGH-CHROMIUM NICKEL ALLOY WITH EXCELLENT RESISTANCES TO WEAR AND LEAD CORROSION AND ENGINE VALVE**
Hochchromhaltige Nickellegierung mit hervorragendem Widerstand gegen Verschleiss und Korrosion durch Blei sowie Motorventile
ALLIAGE CHROME-NICKEL A HAUTE TENEUR EN CHROME RESISTANT BIEN A L'USURE ET A LA CORROSION PAR LE PLOMB ET SOUPAPE DE MOTEUR

(30) Priority: 02.12.1994 JP 299921/94
(43) Date of publication of application: 02.01.1997
(73) Proprietor: Toyota Jidosha Kabushiki Kaisha, Toyota-shi, Aichi-ken 471-71 (JP)
(72) Inventor: HASHIMOTO, Y., Fujisawa Plant In Kobe Steel Ltd., Fujisawa-shi, Kanagawa-ken 251 (JP); YAMAMOTO, A., Fujisawa Plant In Kobe Steel Ltd., Fujisawa-shi, Kanagawa-ken 251 (JP); SUZUKI, Yoshinao, Toyota Jidosha Kabushiki Kaisha, Toyota-shi, Aichi-ken 471-71 (JP); MIYAMOTO, Taisuke, Toyota Jidosha Kabushiki Kaisha, Toyota-shi, Aichi-ken 471-71 (JP); ITO, Yoshihiko, Toyota-shi, Aichi-ken 471-71 (JP); ANDO, Kimihiko, Toyota-shi, Aichi-ken 471-71 (JP)
(74) Representative: Fürniss, Peter, Dr.
(86) International application number: JP9502465
(87) International publication number: WO9617098

(56) References cited:
- EP-A- 0 526 174
- EP-A- 0 529 208
- JP-A- 1 273 693
- JP-A-59 009 147
- US-A- 4 882 125
- MATERIALS SCIENCE AND TECHNOLOGY, CONFERENCE: PERFORMANCE OF HIGH TEMPERATURE MATERIALS IN HEAVY DUTY RECIPROCATING ENGINES, vol. 10, no. 11, 22 March 1994, CRANFIELD, U.K., pages 1002-1012, XP002036234 NICHOLLS, J.R.: "Coatings and Hardfacing alloys for corrosion and wear resistance in diesel engines"
- IRONMAKING AND STEELMAKING, CONFERENCE: MOVING FORWARD WITH STEEL-AUTOMOBILES, vol. 19, no. 4, 13 - 14 May 1992, LONDON, U.K., pages 290-296, XP002036235 BEDDOES, G.N.: "Valve materials and design"
- Z. WERKSTOFFTECH., vol. 9, no. 4, April 1978, pages 132-140, XP002036236 KOCIS, J.F. AND MATLOCK, W.M.: "Some characteristics of automotive exhaust valve alloys"

## Description

### Technical Field

The present invention relates to a Ni-high Cr based alloy having excellent wear and lead corrosion resistance, and an engine valve of which a valve face is built up with a material composed of such a Ni-high Cr based alloy.

### Background Art

Conventionally, stellite alloy such as Co-Cr-W alloy, and corumonoy alloy such as Ni-Cr-B-Si alloy have been generally used as a wear and corrosion resistant buildup material for engine valve faces of motor vehicles. In addition, Cr-Ni-W alloy is disclosed in Japanese Patent application laid-open No. Hei 5-271841 as a tough and corrosion resistant buildup material.

Recently, the using conditions of such buildup materials tend to become severe. In particular, with the increase in output of engines and the rise in exhaust gas temperature of motor vehicles, engine valve faces thereof have been required to have improved toughness, wear resistance, thermal shock resistance, lead corrosion resistance, etc.

In motor vehicles, leaded gasoline may be used as well as nonleaded gasoline. During driving an engine with leaded gasoline, the surface of the built-up part of the valve face is corroded to become rough, which increases the aggressive property thereof against its facing valve seat. This results in wear of the valve seat increasing, as compared to the case of nonleaded gasoline.

The present inventors have noticed that Ni-high Cr based alloy exhibits excellent corrosion resistance at elevated temperatures and made a study thereof. The study result, however, has revealed that the conventional Ni-high Cr based alloy is excellent in corrosion resistance at elevated temperatures, but the hardness thereof is too low to exhibit sufficiently good wear resistance.

Conventionally, the wear resistance of the buildup material has been improved by precipitating and dispersing hard particles of carbides, borides, etc. These hard particles, however, tend to become coarse, and these coarse particles dispersed may cause wear of an abutting member of which the strength has decreased due to the use at elevated temperatures or due to the corrosion resulted from the use of leaded gasoline, whereby the aggressive property of the hard particles has been difficult to be restrained.

### Disclosure of Invention

It is an object of the present invention to provide a wear resistant and lead corrosion resistant Ni-high Cr based alloy which exhibits sufficiently good wear resistance while restraining the aggressive property against an abutting member.

The Ni-high Cr based alloy of the present invention consists of 0.01 to 0.5 % by weight of carbon, 0.01 to 1.0 % by weight of silicon, 0.01 to 10.0 % by weight of manganese, 35.0 to 60.0 % by weight of chromium, 5.0 to 25.0 % by weight of iron, 8.0 to 15.0 % by weight of niobium, the balance being nickel and inevitable impurities.

With the Ni-high Cr based alloy of the present invention, both chromium and nickel contribute to improvement in the oxidation resistance and lead corrosion resistance.

Niobium which is adapted to be added to the alloy of the present invention in the amount of 8.0 to 15.0 % by weight contributes to dispersing and precipitating Ni-Nb and Fe-Nb intermetallic compounds. Resultant hard particles of Ni-Nb and Fe-Nb intermetallic compounds are very fine and entangled complicatedly with each other like a network.

By virtue of the fine and network-like dispersed and precipitated Ni-Nb and Fe-Nb intermetallic compounds, the hardness, wear resistance and thermal shock resistance are improved. Furthermore, since the hard particles of these intermetallic compounds are dispersed and precipitated in the form of very fine particles, they scarcely wear an abutting member, and accordingly, can restrain the aggresive property against the abutting member.

In addition, the Ni-Nb and Fe-Nb intermetallic compounds are thermally stable so that a stable weld metal structure which is not influenced by heat history can be formed. Therefore, when the alloy of the present invention is used in build up welding, dispersed fine and hard particles can be obtained stably, whereby resultant faces exhibit good wear resistance and low aggressive property over a wide temperature range.

Hereinafter, the operation of each element of the Ni-high Cr based alloy of the present invention, and the reasons for the determination of the composition thereof will be explained.

Carbon decreases the viscosity of a molten alloy. Where the alloy of the present invention is used in build up welding, carbon contributes to improvement in the work efficiency and makes the bead configuration better. Furthermore, since carbon has a deoxygenation action, the formation of slag can be restrained and defects such as the inclusion of slag can be prevented. These properties are obtained where carbon content is 0.01 % by weight or more. But, if the carbon content is too much, carbides such as chromium carbides and niobium carbides may be formed. The precipitation of these carbides decreases the toughness of weld metal, which causes the generation of cracks and deterioration of the thermal shock resistance. For these reasons, the carbon content was limited to from 0.01 to 0.5 % by weight. The preferred carbon content is 0.03 to 0.47 % by weight, and the more preferred carbon content is 0.05 to 0.30 % by weight.

Silicon also decreases the viscosity of the molten alloy. Where the alloy of the present invention is used in build up welding, silicon contributes to improvement in the work efficiency and makes the bead configuration better. Furthermore, silicon forms fluid slag over the bead surface uniformly to prevent defects such as the inclusion of slag.

These properties can be obtained where silicon content is 0.01 % by weight or more. But, if the silicon content is too much, silicates such as chromium silicates or nickel silicates may be formed. The precipitation of these silicates decreases the toughness of the weld metal like the case of carbides, resulting in the generation of cracks and the deterioration of the thermal shock resistance. For these reasons, the silicon content was limited to from 0.01 to 1.0 % by weight. The preferred silicon content is 0.04 to 0.94 % by weight, and the more preferred silicon content is 0.10 to 0.60 % by weight.

Manganese also decreases the viscosity of the molten alloy. Where the alloy of the present invention is used in build up welding, manganese contributes to improvement in the work efficiency and makes the bead configuration better. Furthermore, manganese forms fluid slag over the bead surface uniformly to prevent defects such as the inclusion of slag. These properties can be obtained where the manganese content is 0.01 % by weight or more. But, if the manganese content is too much, the toughness of the weld metal decreases, resulting in the generation of cracks and the deterioration of the thermal shock resistance. And in this case, a porous corrosion product layer is formed to facilitate the invasion of sulfur, resulting in the deterioration of the corrosion resistance.

For these reasons, the manganese content was limited to from 0.01 to 10.0 % by weight. The preferred manganese content is 0.04 to 9.90 % by weight, and the more preferred manganese content is 0.15 to 1.0 % by weight, and 1.5 to 5.5 % by weight.

To effect good toughness, the manganese content is preferably from 0.01 to 1.0 % by weight, because in this range, the toughness is especially high so that defects due to the generation of cracks upon build up welding were not observed. If the manganese content is 0.01 to 1.0 % by weight, the lead corrosion resistance in a reducing atmosphere such as an actual engine combustion gas is slightly inferior to that of the alloy of which the manganese content is more than 1.0 % by weight, but is superior to that of the conventional stellite alloy. superior to that of the conventional stellite alloy. Accordingly, the alloy of which the manganese content is 0.01 to 1.0 % by weight is suited for the build up material for a valve face of an engine using nonleaded gasoline.

To effect good lead corrosion resistance, the manganese content is preferably more than 1.0 % by weight but not more than 10.0 % by weight. During using leaded gasoline, sulfide corrosion may occur due to lead sulfide as a combustion product, which casuses the melting point of the Ni-based alloy to be decreased (the melting point of eutectic Ni-Ni₃, S₂ is 645 °C). If the engine driving conditions are varied to raise the temperature of the builtup alloy part of the valve face above this melting point, sulfuration and oxidation of the molten part are promoted to increase the aggresive property thereof against the facing valve seat. In contrast, if the manganese content is more than 1.0 % by weight but not more than 10.0 % by weight, it has been confirmed that the lead corrosion resistance in a reducing atmosphere such as an actual engine combustion gas is improved. Where the manganese content is more than 1.0 % by weight but not more than 10.0 % by weight, the toughness is slightly inferior to the alloy of which the manganese content is within the range of the present invention but not more than 1.0 % by weight, but is superior to that of the conventional stellite alloy. Accordingly, the alloy of which the manganese content is more than 1.0 % by weight but not more than 10.0 % by weight is especially suited for the buildup material for a valve face of an engine using leaded gasoline.

Chromium contributes to improvement in the oxidation resistance and lead corrosion resistance as a solid solution composing a matrix. These properties are obtained where chromium content is 35 % by weight or more. But, if the chromium content is too much, the melting point rises and the viscosity of the molten alloy increases. Where the alloy of which the chromium content is too much is used in build up welding, the bead configuration becomes unstable, and the productivity in producing powers as the buildup material is also decreased. For these reasons, the chromium content was limited to from 35.0 to 60.0 % by weight. The preferred chromium content is 35.5 to 59.0 % by weight and more preferred chromium content is 36.0 to 50.0 % by weight.

Iron combines with niobium to form network-like fine hard particles of intermettallic compound. This enables the improvement in both the wear resistance and thermal shock resistance. The resultant intermetallic compound is thermally stable so as to form a stable weld metal structure which is not influenced by heat history. Where the iron content is out of the scope of the present invention, network-like hard particles are not formed to deteriorate the wear resistance. For these reasons, the iron content was limited to from 5.0 to 25.0 % by weight. The preferred iron content is 5.7 to 24.3 % by weight and the more preferred iron content is 7.5 to 22.5 % by weight.

Niobium combines with iron and nickel to form network-like fine hard particles of intermetallic compounds, thus improving both the wear resistance and thermal shock resistance. The resultant intermetallic compounds are thermally stable so as to form a stable weld metal structure which is not influenced by heat history. These effects can -be achieved where the niobium content is 8.0 % by weight or more. But, if the niobium content is too much, the intermetallic compounds precipitate too much to decrease the toughness of the weld metal, thus deteriorating the thermal shock resistance. For these reasons, the niobium content was limited to from 8.0 to 15.0 % by weight. The preferred niobium content is 8.3 to 14.6 % by weight and the more preferred niobium content is 8.5 to 14.0 % by weight.

As described above, the Ni-high Cr based alloy of the present invention, which is excellent in wear resistance and lead corrosion resistance, contains fine and hard particles of Nb-Ni and Nb-Fe intermetallic compounds, which are dispersed and precipitated like a network by virtue of the addition of niobium. Therefore, the Ni-high Cr based alloy of the present invention exhibits sufficiently good wear resistance, and the aggressive property against an abutting member can be restrained. Accordingly, by build up welding the alloy of the present invention on a valve face of an engine valve for a motor vehicle, the resultant engine valve has the above-described properties.

Furthermore, where the manganese content is 0.01 to 1.0 % by weight, the toughness is especially improved and cracks are difficult to be produced during build-up welding. Where the manganese content is more than 1.0 % by weight but not more than 10.0 % by weight, the lead corrosion resistance is especially improved in surroundings where PbO-PbSO₄ is formed in a reducing atmosphere which is produced during using leaded gasoline, for example.

Other objects, features, and characteristics of the present invention will become apparent upon consideration of the following description and the appended claims with reference to the accompanying drawings, all of which form a part of this specification.

### BRIEF DESCRIPTION OF DRAWINGS

FIG. 1 is a perspective view illustrating the preparation of a test piece to be used in a wear resistance test, wherein a built-up is formed on a heat resistant stainless steel bar by build up welding;
FIG. 2 is a perspective view illustrating the preparation of a test piece to be used in a wear resistance test, wherein a cylindrical test piece is cut out from the heat resistant stainless steel bar after build up welding, which is illustrated in FIG. 1;
FIG. 3 is a perspective view explaining the wear resistance test of the test piece of FIG. 2;
FIG. 4 is a sectional view of one portion of an engine valve of a motor vehicle;
FIG. 5 is a graph showing the valve projection amount after the wear resistance test of an embodiment of the present invention and a comparative example with nonleaded gasoline;
FIG. 6 is a graph showing the seat width increase after the wear resistance test of an embodiment of the present invention and a comparative example with nonleaded gasoline;
FIG. 7 is a photomicrograph showing a metallic structure of a built-up of the alloy of an embodiment of the present invention;
FIG. 8 is a schematic diagram of a metallic structure of a built-up of the alloy of an embodiment of the present invention;
FIG. 9 is a graph showing the valve projection amount after the wear resistance test of the present invention and a comparative example with leaded gasoline; and
FIG. 10 is a graph showing the seat width increase after the wear resistance test of an embodiment of the present invention and a comparative example with leaded gasoline.

### Best Mode for Carrying Out the Invention

Hereinafter, several embodiments of the present invention will be explained in detail.

### First embodiment:

Alloys having compositions shown in TABLES 1 and 2 were melted and gas-atomized with an inert gas to form powders. These powders were classified into the range from 63 to 250 µm to prepare powders for built up welding. Samples Nos. 1 to 12 of TABLE 1 are alloys of the present embodiment, each having a composition within the scope of the present invention. Samples No. 13 to 23 of TABLE 2 are alloys of comparative examples. Each sample is composed of chemical elements identical to those of the present embodiment, but the content of one chemical element thereof is out of the scope of the present invention. Sample No. 24 of TABLE 3 is a comparative example which is composed of conventionally used stellite alloy.

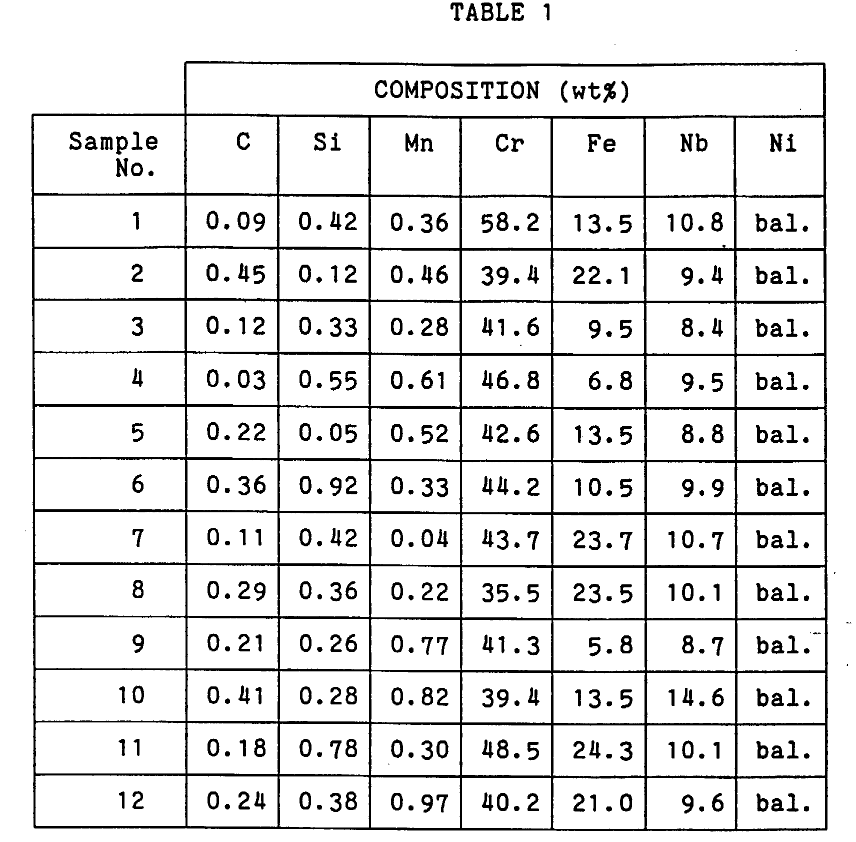

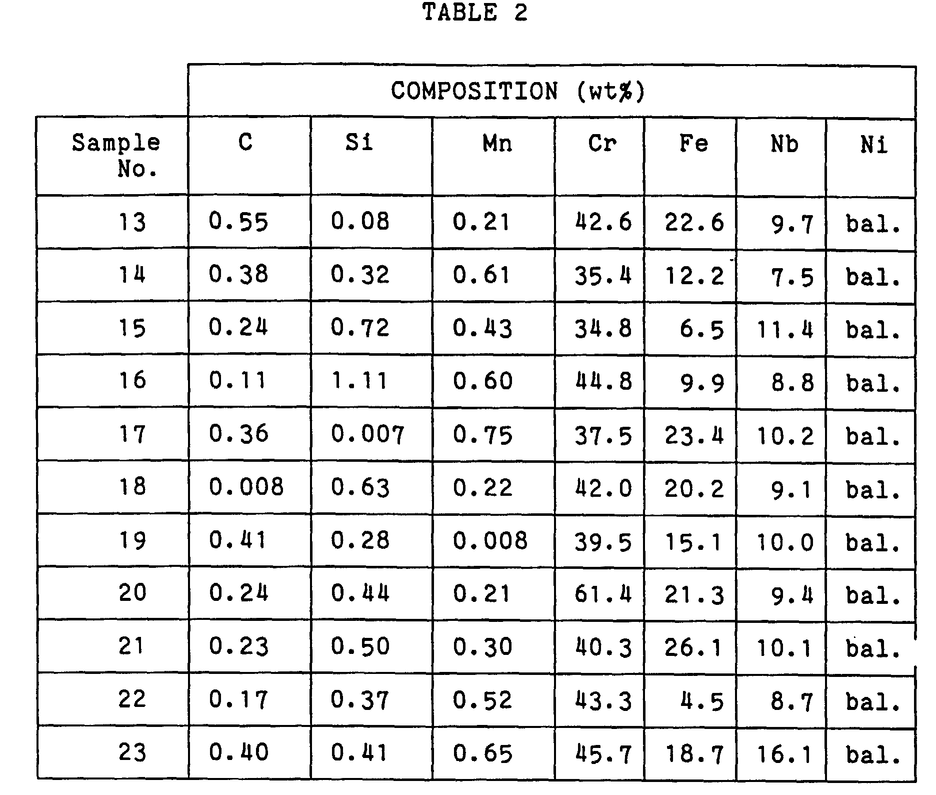

**TABLE 3**

| Sample No. | C | Si | Mn | Cr | W | Co |
|---|---|---|---|---|---|---|
| 24 | 1.18 | 1.35 | 0.008 | 29.8 | 4.68 | bal. |

### Evaluation:

The welding work efficiency, wear resistance, oxidation resistance, lead corrosion resistance and thermal shock resistance of the samples Nos. 1 to 24 were evaluated. The evaluation result is shown in TABLE 4 and TABLE 5. The evaluation method is as follows:

### Welding work efficiency;

Plasma build up welding was carried out on an engine valve face of a motor vehicle under the conditions of 125A in output and 8mm/sec in processing speed. The resultant bead configuration, especially arrangement of beads in the directions of width and thickness thereof, was observed visually. The evaluated results were graded one to five. The welding work efficiency of the comparative alloy of the sample No. 24 (conventionally used stellite alloy) was graded 3 as a standard. With the increase of grade, the welding work efficiency increases.

### Wear resistance;

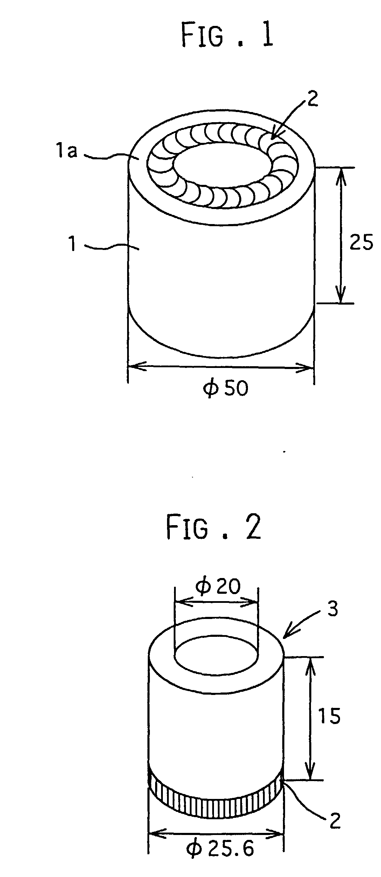

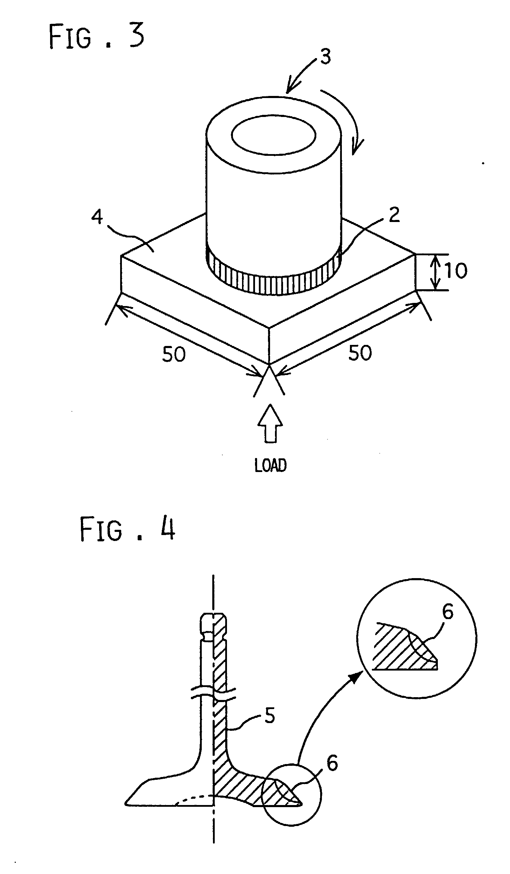

As shown in FIG. 1, a ring-like built-up 2 was formed by build up welding on an end face la of a heat resistant stainless steel bar 1 (25 mm in length and 50 mm in external diameter), similarly to the above-described method. Then, as shown in FIG. 2, a cylindrical test piece 3 (15 mm in length, 25.6 mm in external diameter and 20 mm in internal diameter) which has the built-up 2 on an entire end face thereof was cut out of the bar 1. Then, as shown in FIG. 3, the test piece 3 was rotated on a heat resistant stainless steel plate 4 (50 mm x 50 mm x 10 mm) 1000 times at 800°C under the load of 200 kgf. Then, the roughness of the surface of each test piece was visually observed to evaluate the wear resistance thereof. The evaluated results were graded one to five. The wear resistance of the comparative alloy of the sample No. 24 (conventionally used stellite alloy) was graded 3 as a standard. With the increase of grade, the wear resistance is improved.

### Oxidation resistance;

After a built-up was formed on mild steel by build up welding, similarly to the above-described method, a test piece (10 mm in length, 10 mm in width and 2 mm in thickness) was cut out from the resultant built-up part. This test piece was subjected to a heat treatment in the air at 800 °C for 100 hours. Then, the weight change was evaluated.

### Lead corrosion resistance;

Another test piece was cut out, similarly to the evaluating method of the oxidation resistance, and immersed in a synthetic corrosion ash of PbO and PbSO₄ in the air at 900 °C for 10 hours. Then, the thickness reduction was evaluated.

### Thermal shock resistance;

A built-up was formed on an engine valve seat of a motor vehicle by build up welding, similarly to the above-described method, and was cooled with water from 900 °C to 100 °C. This water cooling was repeated 100 times, and the generation of cracks was observed. If cracks are generated, the number of repetition when they are generated is shown.

**TABLE 4**

| Sample No. | Welding work efficiency | Wear resistance | Oxidation resistance (mg/cm² ) | Corrosion resistance ( µm) | Thermal shock resistance |
|---|---|---|---|---|---|
| 1 | 3 | 4 | 0.25 | 100 | no crack |
| 2 | 3 | 4 | 0.33 | 150 | no crack |
| 3 | 3 | 4 | 0.19 | 140 | no crack |
| 4 | 3 | 4 | 0.27 | 180 | no crack |
| 5 | 3 | 4 | 0.25 | 120 | no crack |
| 6 | 4 | 4 | 0.25 | 120 | no crack |
| 7 | 3 | 4 | 0.27 | 170 | no crack |
| 8 | 3 | 4 | 0.30 | 180 | no crack |
| 9 | 3 | 4 | 0.29 | 120 | no crack |
| 10 | 4 | 4 | 0.27 | 160 | no crack |
| 11 | 3 | 4 | 0.31 | 120 | no crack |
| 12 | 3 | 4 | 0.22 | 120 | no crack |

**TABLE 5**

| Sample No. | Welding work efficiency | Wear resistance | Oxidation resistance (mg/cm² ) | Corrosion resistance (µm) | Thermal shock resistance |
|---|---|---|---|---|---|
| 13 | 3 | 4 | 0.85 | 320 | 28 |
| 14 | 3 | 2 | 0.28 | 140 | no crack |
| 15 | 3 | 4 | 0.95 | 800 | no crack |
| 16 | 3 | 4 | 0.30 | 160 | 28 |
| 17 | 1 | 4 | 0.25 | 140 | no crack |
| 18 | 1 | 4 | 0.22 | 120 | no crack |
| 19 | 1 | 4 | 0.27 | 180 | no crack |
| 20 | 2 | 4 | 0.22 | 120 | no crack |
| 21 | 3 | 2 | 0.33 | 140 | no crack |
| 22 | 3 | 2 | 0.31 | 160 | no crack |
| 23 | 3 | 4 | 0.21 | 110 | 42 |
| 24 | 3 | 3 | 0.44 | 450 | no crack |

The samples Nos. 1 to 12 of TABLE 4 exhibited good results in every evaluated property.

The sample No. 13 of TABLE 5 was inferior in thermal shock resistance because of too much carbon content. The sample No. 18 of which the carbon content was too little was bad in fluidity because of high viscosity of weld metal, whereby a smooth and uniform bead configuration could not be obtained.

The sample No. 14 of which the niobium content was too little was inferior in wear resistance, because hard particles of Nb-Ni and Nb-Fe intermetallic compounds were not formed.

The sample No. 23 of which the niobium content was too much was inferior in thermal shock resistance because of too much precipitation amount of the above-described intermetallic compounds.

The sample No. 15 of which the chromium content was too little was inferior in lead corrosion resistance, and the sample No. 20 of which the chromium content was too much was inferior in welding work efficiency because of high viscosity of weld metal.

The sample No. 16 of which the silicon content was too much was inferior in thermal shock resistance, because silicates were easily formed. The sample No. 17 of which the silicon content was too little was inferior in fluidity because of high viscosity of weld metal, whereby a smooth and uniform bead configuration could not be obtained.

The sample No. 19 of which the manganese content was too little was inferior in fluidity because of high viscosity of weld metal, whereby a smooth and uniform bead configuration could not be obtained.

The samples No. 21 and No. 22 of which the iron content was out of the scope of the present invention do not precipitate network-like intermetallic compounds so as to be inferior in wear resistance.

The sample No. 24 composed of conventionally used stellite alloy was excellent in welding work efficiency, wear resistance, and thermal shock resistance, but inferior in lead corrosion resistance and oxidation resistance.

### Second embodiment:

As shown in FIG. 4, plasma build up welding was carried out on a face 6 of an engine valve 5 with the powder of the sample No. 2 of the first embodiment under the conditions of 125 A in output and 8 mm/sec in processing speed. For comparison, similar plasma build up welding was carried out with the conventional stellite alloy (Sample No. 24).

An endurance test of these engine valves was performed for 300 hours, using an actual gasoline engine of 2700 cc with nonleaded gasoline at an exhaust gas temperature of 950 °C. After the endurance test, the valve projection amount and the valve seat width increase were measured. The valve projection amount represents the total amount of the wear of the valve face (wear resistance) and that of the valve seat (aggressive property), and the valve seat width increase represents the wear of the valve seat.

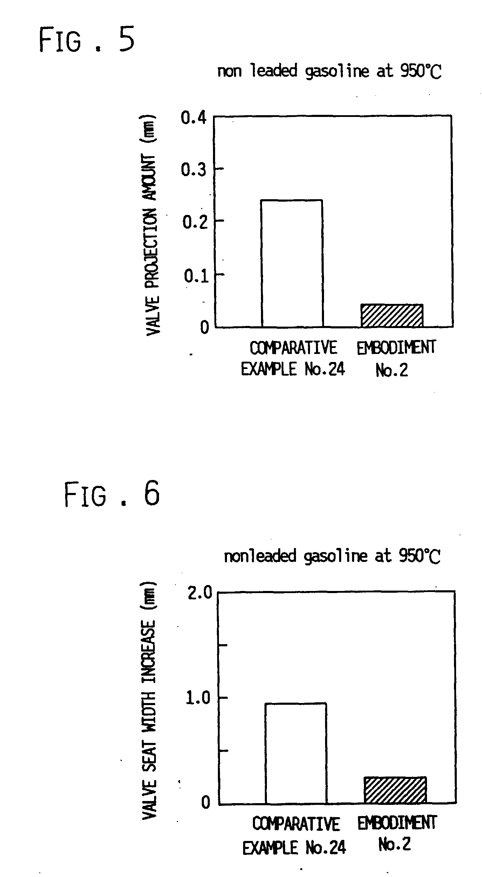

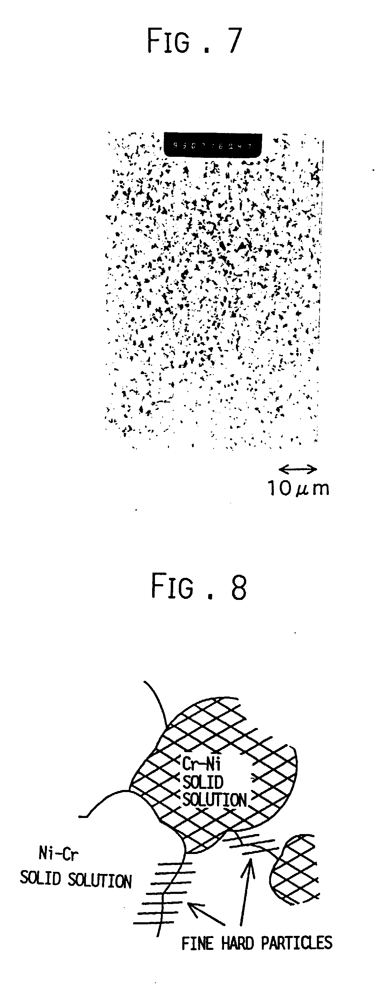

The test results are shown in FIGS. 5 and 6. From these graphs, it was confirmed that the wear of the valve seat (valve seat width increase) of the sample No. 2 was less than that of the comparative example using the stellite alloy, and this enables the valve projection amount of the present embodiment to be decreased, as compared to that of the comparative example, whereby the aggressive property could be restrained.

The alloy of the present embodiment is excellent in oxidation resistance so as to be suited especially for a valve of a high load engine which is operated with nonleaded gasoline.

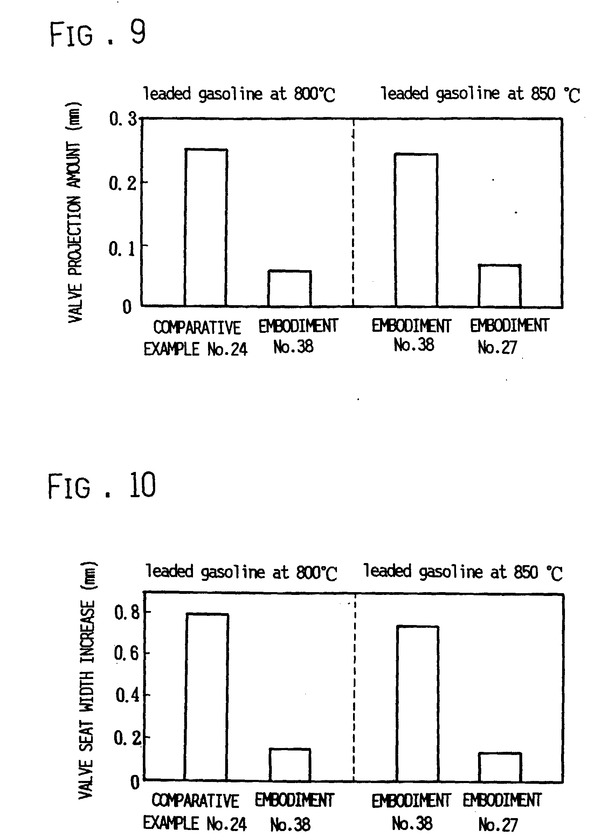

FIG. 7 is a photomicrograph showing the metallic structure of the built-up of the sample No. 2 of the present embodiment, and FIG. 8 is a schematic diagram thereof. As shown, the metallic structure of the present embodiment contains fine hard particles.

### Third embodiment:

Alloys having compositions shown in TABLES 6 and 7 were melted and gas-atomized with an inert gas to prepare powders. These powders were classified in the range of 63 to 250 µm to prepare powders for build up welding. The samples No. 25 to 38 of which the compositions are shown in TABLE 6 are the alloys of the present embodiment, which are within the composition range of the present invention. The samples No. 39 to 49 of which the compositions are shown in TABLE 7 are comparative alloys composed of elements identical to those of the alloy of the present invention, but the content of one element is out of the scope of the present invention.

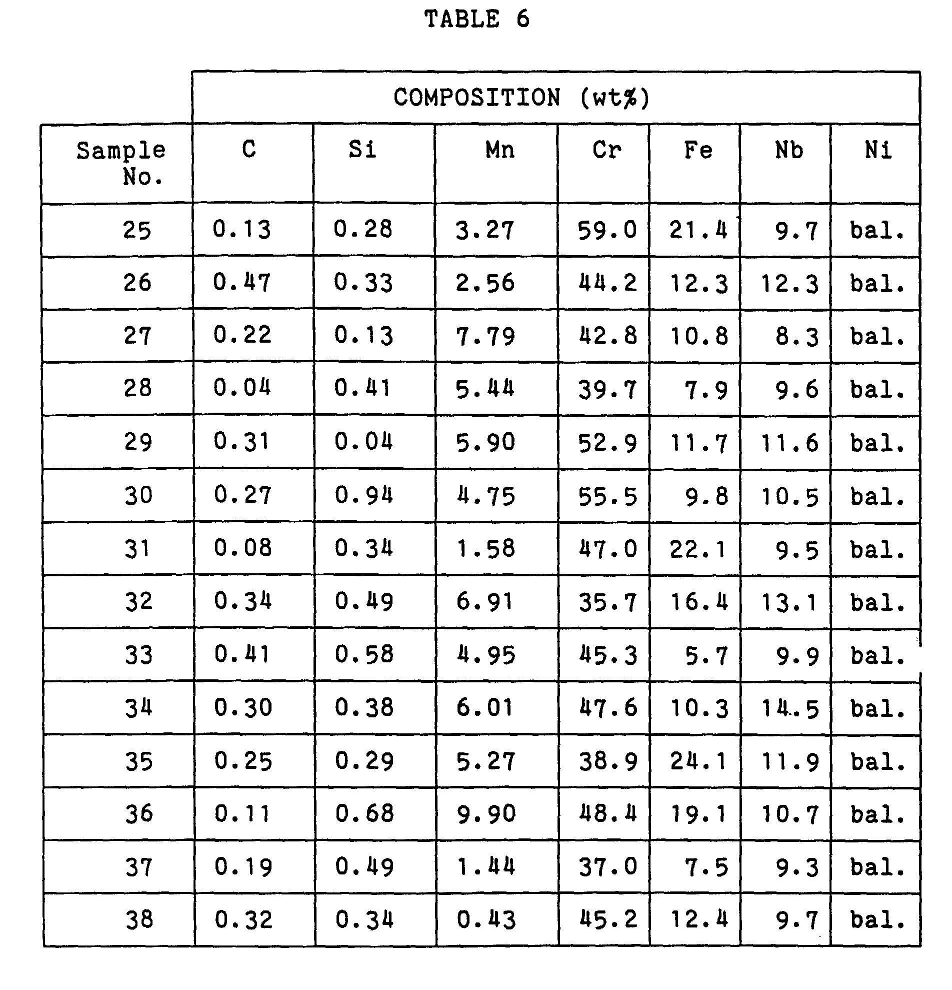

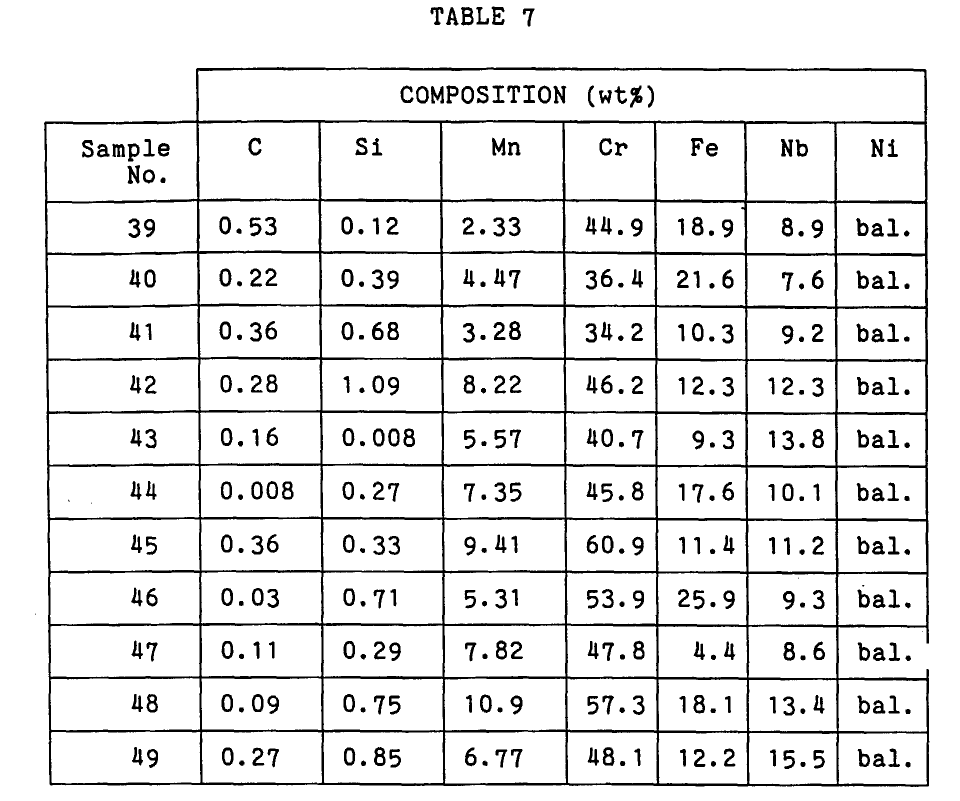

### Evaluation:

The welding work efficiency, wear resistance, lead corrosion resistance and thermal shock resistance of the powders of Samples Nos. 25 to 49 and the comparative alloy (conventionally used stellite alloy) of Sample No. 24 shown in Table 3 were evaluated. The evaluated results are shown in TABLE 8 and TABLE 9. The evaluating method is as follows:

### Welding work efficiency;

Identical to the evaluating method of the first embodiment.

### Wear resistance;

Identical to the evaluating method of the first embodiment.

### Lead corrosion resistance;

Plasma build up welding was carried out on soft steel under the conditions of 125A in output and 8mm/sec in treating speed. A test piece (10 mm in length, 10 mm in width and 2 mm in thickness) was cut out from the resultant built-up part. This test piece was immersed in a synthetic corrosion ash composed of PbO-PbSO₄, and held in a reducing atmosphere of N₂ - 10%CO - 9%CO₂ at 900°C for 10 hours. Resultant thickness reduction was evaluated. In the first embodiment, the evaluation was performed in the air.

In contrast, in the present embodiment, the evaluation was performed in a reducing atmosphere simulating the actual engine combustion state.

### Thermal shock resistance;

Identical to the evaluating method of the first embodiment.

**TABLE 8**

| Sample No. | Welding work efficiency | Wear resistance | Corrosion resistance (µm) | Thermal shock resistance |
|---|---|---|---|---|
| 25 | 3 | 4 | 30 | no crack |
| 26 | 3 | 4 | 50 | no crack |
| 27 | 3 | 4 | 10 | no crack |
| 28 | 3 | 4 | 30 | no crack |
| 29 | 3 | 4 | 20 | no crack |
| 30 | 3 | 4 | 20 | no crack |
| 31 | 3 | 4 | 50 | no crack |
| 32 | 3 | 4 | 40 | no crack |
| 33 | 4 | 4 | 30 | no crack |
| 34 | 3 | 4 | 10 | no crack |
| 35 | 3 | 4 | 40 | no crack |
| 36 | 4 | 4 | 20 | no crack |
| 37 | 3 | 4 | 60 | no crack |
| 38 | 4 | 4 | 100 | no crack |

**TABLE 9**

| Sample No. | Welding work efficiency | Wear resistance | Corrosion resistance (µm) | Thermal shock resistance |
|---|---|---|---|---|
| 39 | 3 | 4 | 70 | 25 |
| 40 | 3 | 2 | 50 | no crack |
| 41 | 4 | 4 | 400 | no crack |
| 42 | 4 | 4 | 30 | 14 |
| 43 | 1 | 4 | 40 | no crack |
| 44 | 1 | 4 | 20 | no crack |
| 45 | 2 | 4 | 30 | no crack |
| 46 | 3 | 2 | 20 | no crack |
| 47 | 4 | 2 | 30 | no crack |
| 48 | 4 | 4 | 200 | no crack |
| 49 | 4 | 4 | 10 | 22 |
| 24 | 3 | 3 | 250 | no crack |

As shown in TABLE 8, the samples Nos. 25 to 36 of the present embodiment exhibit good results in every evaluated property. The samples Nos. 37 and 38, each containing less amount of manganese, as compared to that of other samples, are slightly inferior in lead corrosion resistance.

The comparative sample No. 39 shown in TABLE 9 is inferior in thermal shock resistance, because the carbon content thereof is too much. The sample No. 44 of which the carbon content is too little is inferior in fluidity of weld metal, because the viscosity thereof is high, whereby a smooth and uniform bead configuration could not be obtained.

The sample No. 40 of which the niobium content is too little is inferior in wear resistance, because hard particles of Nb-Ni intermetallic compound and Nb-Fe intermetallic compound are not formed. The sample No. 49 of which the niobium content is too much is inferior in thermal shock resistance, because the amount of precipitation of the above intermetallic compounds is too much.

The sample No. 41 of which the chromium content is too little is inferior in lead corrosion resistance. The sample No. 45 of which the chromium content is too much is inferior in welding work efficiency, because the viscosity of the weld metal is high.

The sample No. 42 of which the silicon content is too much is inferior in thermal shock resistance, because silicide is likely to be formed. The samle No. 43 of which the silicon content is too little is inferior in fluidity, because the viscosity of the weld metal is high, whereby a smooth and uniform bead configuration could not be effected.

The sample No. 48 of which the manganese content is too much is inferior in lead corrosion resistance, because porous corrosion products are formed.

The samples No. 46 and No. 47 of which the iron content is out of the scope of the present invention are inferior in wear resistance, because intermetallic compounds do not precipitate like a network.

The sample No. 24 composed of conventionally used stellite alloy is superior in welding work efficiency, wear resistance and thermal shock resistance, but inferior in lead corrosion resistance.

### Fourth embodiment:

As shown in FIG. 4, plasma build up welding was carried out on a face 6 of an engine valve 5 with the powder of the sample No. 27 of the third embodiment under the conditions of 125 A in output and 8 mm/sec in processing speed. Similarly, plasma build up welding was carried out on a face 6 of another engine valve 5 with the powder of the sample No. 38 of the third embodiment.

For comparison, similar plasma build up welding was carried out with a conventional stellite alloy (Sample No. 24).

An endurance test of these engine valves was performed for 300 hours, using an actual gasoline engine of 2700 cc with leaded gasoline at an exhaust gas temperature of 800°C (conventional stellite alloy -Sample No. 24), 800°C and 850°C (the alloy of Sample No. 38), and 850°C (the alloy of Sample No. 27) After the endurance test, the valve projection amount and valve seat width increase were measured.

The test results are shown in FIGS. 9 and 10.

From these graphs, it has been confirmed that at the exhaust gas temperature of 800°C, the wear of the valve seat of the sample No. 38 of which the manganese content was as relatively little as 0.43 % by weight was less than that of the comparative example using the conventional stellite alloy, but at the exhasut gas temperature of 850°C, namely under severe wear conditions, the wear of the valve seat of even the sample No. 38 which has good wear resistance is increased. In contrast, even at the exhaust gas temperature of 850 °C, the wear of the valve seat of the sample No. 27 of which the manganese content is as relatively much as 7.99 % by weight can be decreased as little as that of the sample No. 38, which is exhibited at the exhaust gas temperature of 800°C.

### Fifth embodiment:

To examine the relation between the manganese content and the build up property (rate of generation of cracks in built-up part), powders of the samples Nos. 36 and 38 of the third embodiment were mixed together in the weight ratio shown in TABLE 10 to prepare powders having different manganese contents. As shown in FIG. 4, plasma build up welding was carried out on a face 6 of an engine valve 5 with each powder under the conditions of 125 A in output and 8 mm/sec in processing speed. Then, the face 6 is shaped into a desired product configuration, and the rate of generation of cracks in the built-up part was observed visually. The result is also shown in TABLE 10.

**TABLE 10**

| mixing ratio (wt%) | | manganese content (wt%) | rate of generation of cracks (number of defects/number of samples) |
|---|---|---|---|
| No. 36 | No. 38 | | |
| 0 | 100 | 0.43 | 0 / 22 |
| 25 | 75 | 2.80 | 0 / 22 |
| 50 | 50 | 5.17 | 0 / 22 |
| 75 | 25 | 7.53 | 1 / 22 |
| 100 | 0 | 9.90 | 2 / 23 |

As is apparent from TABLE 10, when the manganese content is 0.01 to 10.0 % by weight, which is within the scope of the present invention, the rate of generation of cracks is small. As the manganese content is decreased, the rate of generation of cracks tends to be decreased. From this result, it has been proved that in order to improve the toughness, it is preferable to decrease the manganese content within the scope of the present invention.

Where the alloy of the present invention is used as the build up material, it may have any state such as powder, solid wire (rod) or the like. Welding may be carried out by one of arc welding, plasma welding, lazer, electron beam, or the like.

While the invention has been described in connection with what are considered presently to be the most practical and preferred embodiments, it is to be understood that the invention is not limited to the disclosed embodiments, but, on the contrary, is intended to cover various modifications and equivalent arrangements included within the spirit and scope of the appended claims.

## Claims

1. A Ni-high Cr based alloy having excellent wear resistance and lead corrosion resistance, which consists of 0.01 to 0.5 % by weight of carbon, 0.01 to 1.0 % by weight of silicon, 0.01 to 10.0 % by weight of manganese, 35.0 to 60.0 % by weight of chromium, 5.0 to 25.0 % by weight of iron, and 8.0 to 15.0 % by weight of niobium, the balance being nickel and inevitable impurities.

2. A Ni-high Cr based alloy as claimed in claim 1, wherein said alloy contains 0.01 to 1.0 % by weight of manganese.

3. A Ni-high Cr based alloy as claimed in claim 1, wherein said alloy contains more than 1.0 % by weight but not more than 10.0 % by weight of manganese.

4. A Ni-high Cr based alloy as claimed in claims 1 to 3, wherein said alloy is used as a buildup material for an engine valve face.

## Patentansprüche

1. Ni-Cr-Legierung mit hohem Cr-Gehalt mit einer ausgezeichneten Verschleißbeständigkeit und Bleikorrosionsbeständigkeit, welche aus 0,01 bis 0,5 Gew.-% an Kohlenstoff, 0,01 bis 1,0 Gew.-% an Silicium, 0,01 bis 10,0 Gew.-% an Mangan, 35,0 bis 60,0 Gew.-% an Chrom, 5,0 bis 25,0 Gew.-% an Eisen und 8,0 bis 15,0 Gew.-% an Niob besteht, wobei der Rest Nickel und unvermeidbare Verunreinigungen sind.

2. Ni-Cr-Legierung mit hohem Cr-Gehalt nach Anspruch 1, wobei die Legierung 0,01 bis 1,0 Gew.-% an Mangan enthält.

3. Ni-Cr-Legierung mit hohem Cr-Gehalt nach Anspruch 1, wobei die Legierung mehr als 1,0 Gew.-% jedoch nicht mehr als 10,0 Gew.-% an Mangan enthält.

4. Ni-Cr-Legierung mit hohem Cr-Gehalt nach den Ansprüchen 1 bis 3, wobei die Legierung als ein Konstruktionsmaterial für eine Motorventilsitzfläche verwendet wird.

## Revendications

1. Un alliage base Cr à haute teneur en Ni présentant une excellente résistance à l'usure et une excellente résistance à la corrosion par le plomb, qui consiste en 0,01 à 0,5 % en poids de carbone, 0,01 à 1,0 % de silicium, 0,01 à 10,0 % de manganèse, 35,0 à 60,0 % en poids de chrome, 5,0 à 25,0 % en poids de fer et 8,0 à 15,0 % en poids de niobium, le complément étant le nickel et les impuretés inévitables.

2. Un alliage base Cr à haute teneur en Ni selon la revendication 1, dans lequel ledit alliage contient de 0,01 à 1,0 % en poids de manganèse.

3. Un alliage base Cr à haute teneur en Ni selon la revendication 1, dans lequel ledit alliage contient plus de 1,0% en poids, mais pas plus de 10,0 % en poids de manganèse.

4. Un alliage base Cr à haute teneur en Ni selon une quelconque des revendications 1 à 3, dans lequel ledit alliage est utilisé en tant de matériau constitutif de la surface d'une soupape de moteur.
